# EUROPEAN PATENT APPLICATION

(11) **EP 4 715 984 A1**
(43) Date of publication of application: **25.03.2026**
(21) Application number: 25768544.6
(22) Date of filing: 27.02.2025
(51) Int. Cl.: H01M 50/244, H01M 50/262, H01M 50/251

(54) **WALL-MOUNTING STRUCTURE FOR ENERGY STORAGE DEVICE**

(30) Priority: 07.03.2024 KR 20240032330
(71) Applicant: LG Energy Solution, Ltd., Seoul 07335 (KR)
(72) Inventor: OH, Sunghoon, Daejeon 34122 (KR); KIM, Kiyoun, Daejeon 34122 (KR)
(74) Representative: Plasseraud IP
(86) International application number: PCT/KR2025/002751
(87) International publication number: WO 2025/188020

(57) **Abstract**

A wall mounting structure for an energy storage device may include a coupling bracket disposed on the energy storage device and including a support protrusion, and a wall mounting bracket including a rack bracket, on which the support protrusion is supported, and configured to be fixed to a wall.

In the wall mounting structure of the energy storage device according to an embodiment of the present disclosure, structural rigidity for supporting the energy storage device may be secured, installation may be made easy by hanging the energy storage device on the wall mounting bracket fixed to the wall, and the need for a structure for supporting the bottom of the energy storage device may be eliminated.

## Description

### [TECHNICAL FIELD]

The present disclosure relates to a wall mounting structure for an energy storage device, and more specifically, to a wall mounting structure capable of storing an energy storage device by hanging the energy storage device on a wall.

### [BACKGROUND ART]

Unlike primary batteries that cannot be recharged, secondary batteries refer to batteries that may be charged and discharged, and are applied not only to portable devices but also to electric vehicles (EVs) and hybrid electric vehicles (HEVs) that are driven by an electric drive source.

Currently, the types of secondary batteries widely used include lithium ion batteries, lithium polymer batteries, nickel cadmium batteries, nickel hydrogen batteries, nickel zinc batteries, and the like. The operating voltage of these unit secondary battery cells, i.e., unit battery cells, is approximately 2.5 volts (V) to 4.6 V. Accordingly, when a higher output voltage is required, a battery pack is configured by connecting multiple battery cells in series. In addition, a battery pack is configured by connecting multiple battery cells in parallel depending on the charge and discharge capacity required for the battery pack. Accordingly, the number of battery cells included in the battery pack may be set in various ways depending on the required output voltage or charge/discharge capacity.

When configuring a battery pack by connecting multiple battery cells in series/parallel, generally, at least one battery cell, a battery module composed of multiple battery cells may be configured first, and then at least one of these battery modules and an additional component may be used to configure the battery pack. Here, the battery module refers to a component in which multiple battery cells are connected in series or parallel, and the battery pack may refer to a component in which multiple battery modules are connected in series or parallel to increase capacity, output, and the like.

Recently, energy storage devices are being used to store generated power, and energy storage devices may be configured to include multiple battery modules.

Energy storage devices in a small size may be used for domestic purposes, and for such small energy storage devices, different mounting methods may be required.

### [DESCRIPTION OF THE DISCLOSURE]

### [TECHNICAL OBJECTIVES]

The present disclosure aims to provide a wall mounting structure for an energy storage device that may stably hang the energy storage device on a wall for storage.

### [TECHNICAL MEANS]

A wall mounting structure for an energy storage device according to an embodiment of the present disclosure may include a coupling bracket disposed on the energy storage device and including a support protrusion and a wall mounting bracket including a rack bracket, on which the support protrusion is supported, and fixed configured to be to a wall.

Furthermore, the wall mounting bracket may include at least one coupling hole extending in a width direction of the wall mounting bracket, and a fixing portion inserted into the at least one coupling hole may be coupled to the wall such that the wall mounting bracket is fixed to the wall.

Furthermore, the rack bracket may be disposed on each of upper and lower sides of the wall mounting bracket.

Furthermore, the rack bracket may include a coupling portion coupled to the wall mounting bracket, a support bent forward from the coupling portion, and an upward extension bent upward from the support.

Furthermore, a lower portion of the support protrusion may be supported by the support.

Furthermore, one side of the support protrusion may be supported by the upward extension.

Furthermore, an end of the upward extension may be bent forward.

Furthermore, the upward extension may be disposed on each of left and right sides in front of the support.

Furthermore, the wall mounting bracket may further include a wing plate that is bent forward at opposite side ends of the wall mounting bracket.

Furthermore, the wing plate may include a protrusion plate which is shaped convexly outward.

Furthermore, the wing plate may further include a coupling hole formed in the protrusion plate.

Furthermore, the coupling bracket may be disposed on each of left and right sides at a rear surface of the energy storage device.

Furthermore, the support protrusion may be disposed on each of upper and lower portions of the coupling bracket.

Furthermore, the coupling bracket may include a coupling plate coupled to a case of the energy storage device, an outer plate bent rearward from an outer end of the coupling plate, and an inner plate bent rearward from an inner end of the coupling plate.

Furthermore, the support protrusion may be disposed on the inner plate.

Furthermore, the wall mounting bracket may further include a wing plate bent forward from each of opposite side ends of the wall mounting bracket, a coupling hole that is formed in the outer plate, and a coupling portion inserted into the coupling hole and is coupled to the wing plate.

Furthermore, the coupling bracket may further include an extension support plate which is bent and extends from the inner plate toward the outer plate, and a side support plate which is bent from an end of the extension support plate toward the coupling plate.

Furthermore, the wall mounting bracket may further include a wing plate which is bent forward from each of opposite side ends of the wall mounting bracket, and the side support plate may be supported by contacting the wing plate.

Furthermore, the wall mounting bracket may further include an elastic portion disposed on the side support plate.

Furthermore, the wall mounting bracket may further include a wing plate which is bent forward from each of opposite side ends of the wall mounting bracket, and the elastic portion may elastically support the wing plate.

### [EFFECT OF THE INVENTION]

A wall mounting structure of an energy storage device according to an embodiment of the present disclosure is capable of easily installing the energy storage device and is capable of stably supporting the energy storage device.

### [BRIEF DESCRIPTION OF THE DRAWINGS]

FIG. 1 is a perspective view illustrating an energy storage device according to an embodiment of the present disclosure,
FIG. 2 is an exploded perspective view illustrating the energy storage device illustrated in FIG. 1,
FIG. 3 is a perspective view illustrating an energy storage device and a wall mounting bracket according to an embodiment of the present disclosure,
FIG. 4 is a rear perspective view illustrating an energy storage device coupled to a wall mounting bracket according to an embodiment of the present disclosure,
FIG. 5 is a rear perspective view illustrating an energy storage device according to an embodiment of the present disclosure,
FIGS. 6 to 11 are views illustrating a process of mounting an energy storage device on a wall mounting bracket according to an embodiment of the present disclosure, FIG. 6 is a view illustrating a state in which the energy storage device is separated from the wall mounting bracket,
FIG. 7 is a view illustrating a state in which the energy storage device is transferred to the wall mounting bracket according to an embodiment of the present disclosure,
FIG. 8 is a partial side detailed view of FIG. 7,
FIG. 9 is a view illustrating a state in which the energy storage device is supported by a wall mounting bracket,
FIG. 10 is a detailed view illustrating that a support protrusion of a coupling bracket is supported by a rack bracket,
FIG. 11 is a view illustrating a state in which an energy storage device is assembled to a wall mounting bracket according to an embodiment of the present disclosure,
FIG. 12 is a view illustrating a wall mounting structure of an energy storage device 1000 according to another embodiment,
FIG. 13 is a view illustrating a wall mounting structure of an energy storage device 1000 according to another embodiment,
FIG. 14 is a perspective view illustrating a battery module according to an embodiment of the present disclosure,
FIG. 15 is a view illustrating inside of a battery module according to an embodiment of the present disclosure,
FIG. 16 is a view illustrating an example of a battery cell according to an embodiment of the present disclosure,
FIG. 17 is a view illustrating a support frame supporting a battery module in an energy storage device according to an embodiment of the present disclosure,
FIG. 18 is a detailed view illustrating a vertical support in FIG. 17,
FIG. 19 is a detailed view illustrating a lower support in FIG. 17,
FIG. 20 is a detailed view illustrating an upper support in FIG. 17,
FIG. 21 is a front view illustrating a state in which a battery module is mounted on the upper support in FIG. 17,
FIG. 22 is a perspective view illustrating a support frame with a battery module mounted on it according to an embodiment of the present disclosure, and
FIG. 23 is a perspective view illustrating a support frame with a battery module mounted on it, viewed from another angle according to an embodiment of the present disclosure.

### [MODES FOR IMPLEMENTING THE DISCLOSURE]

The advantages and features of the present disclosure and methods for achieving them will become clear by referring to the embodiments described in detail below along with the accompanying drawings. However, the present disclosure is not limited to the embodiments disclosed below and will be implemented in various different forms, the present embodiments only serve to ensure that the disclosure of the present disclosure is complete, it is provided to fully inform those who have common knowledge in the technical field to which the present disclosure pertains, and the present disclosure is to be only defined by the scope of the claims. Accordingly, in some embodiments, well-known process steps, well-known device structures, and well-known techniques are not specifically described in order to avoid ambiguous interpretation of the present disclosure. Like reference numerals refer to like elements throughout the specification.

In order to clearly express multiple layers and areas in the drawing, the thickness may be enlarged. Throughout the specification, similar parts are given the same reference numerals. When a portion of a layer, film, region, plate and the like is said to be "on" another part, this includes not only being "directly on" another part, but also cases where there is another portion therebetween. Conversely, when a portion is said to be "directly on" another part, it means that there is no other portion therebetween. Additionally, when a portion of a layer, film, region, plate and the like is said to be "beneath" another part, this includes not only cases where it is "directly beneath" another part, but also cases where there is another portion therebetween. Conversely, when a portion is said to be "directly beneath" another part, it means that there is no other portion therebetween.

An energy storage device 1000 according to an embodiment of the present disclosure will be described in detail with reference to the drawings.

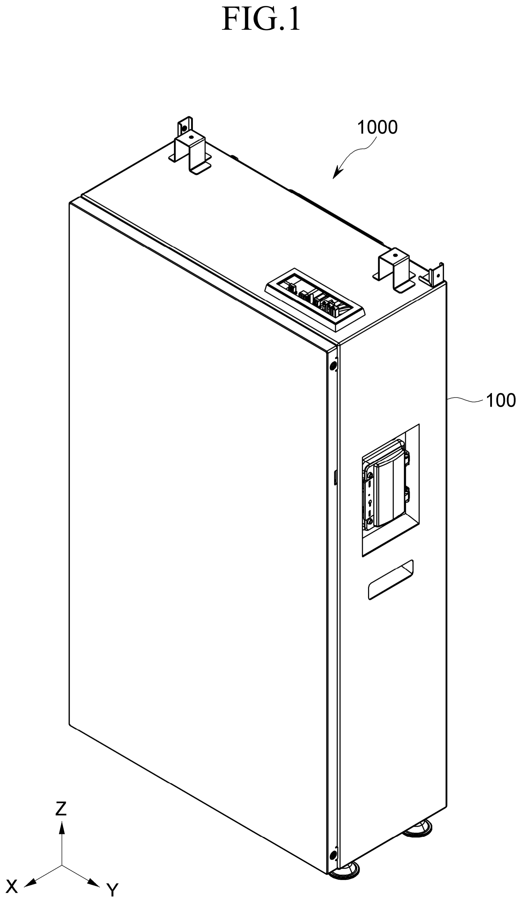

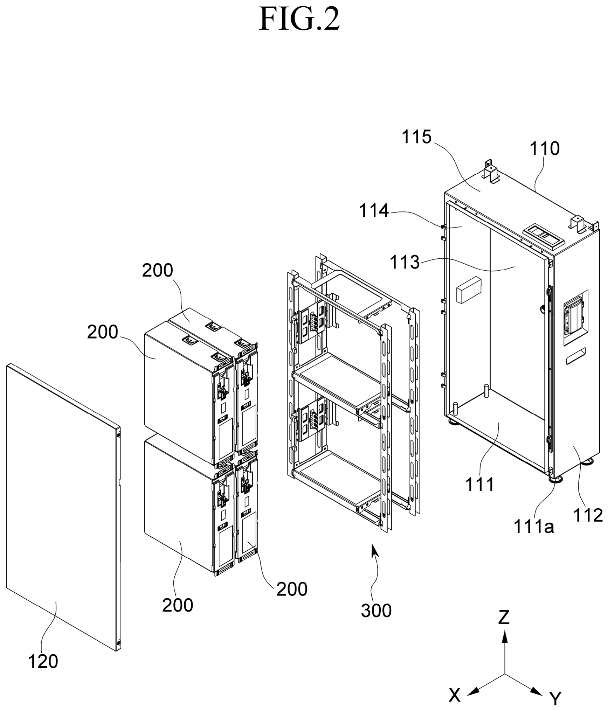

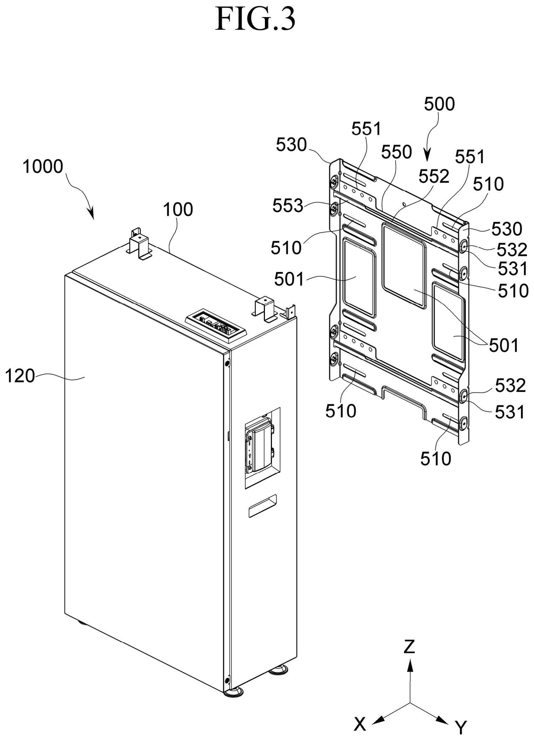

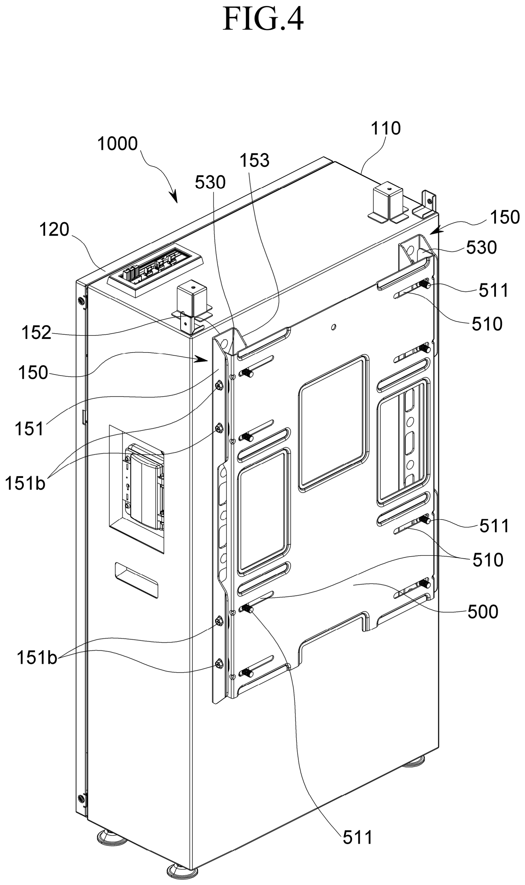

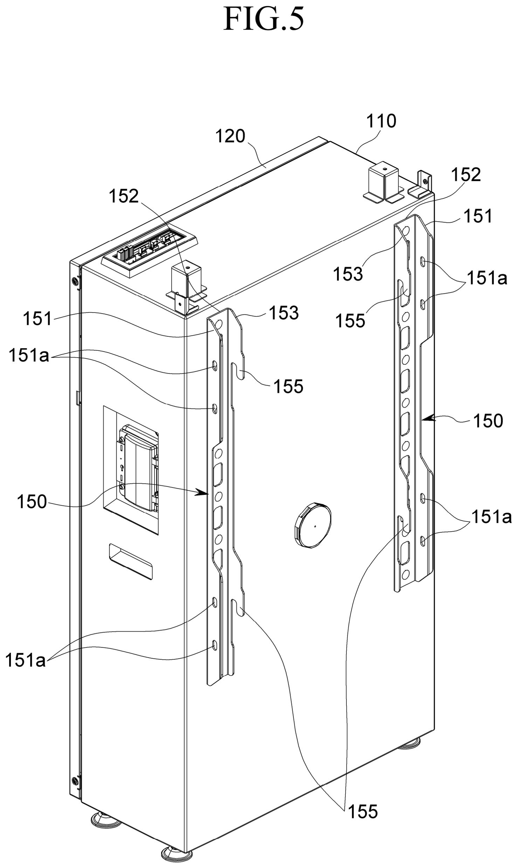

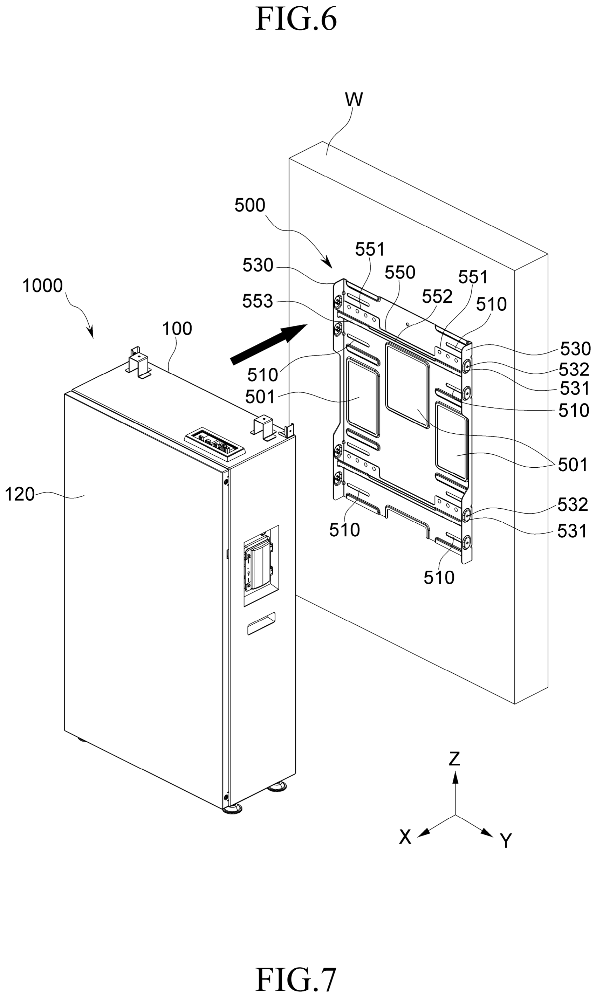

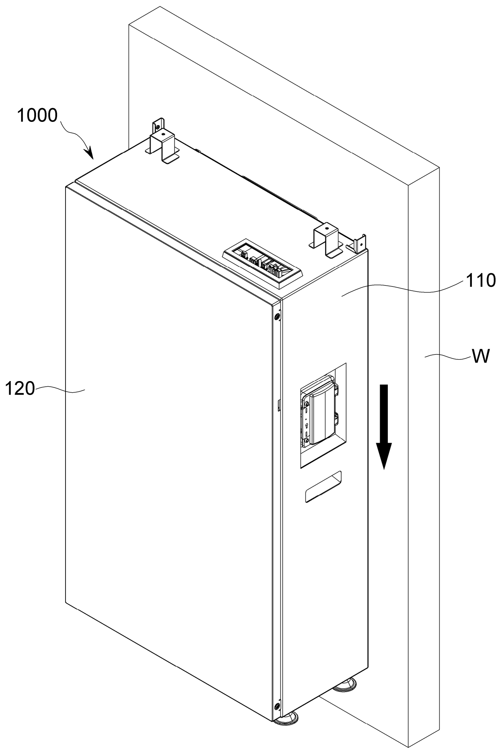

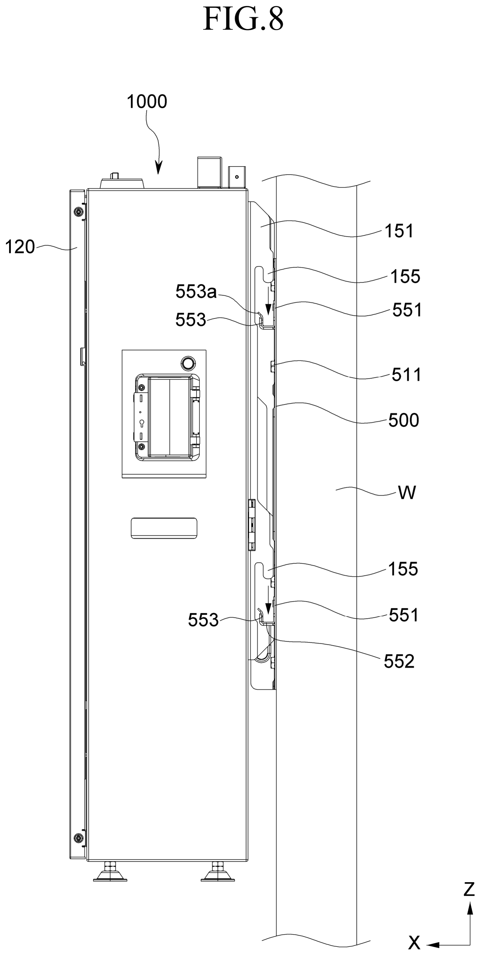

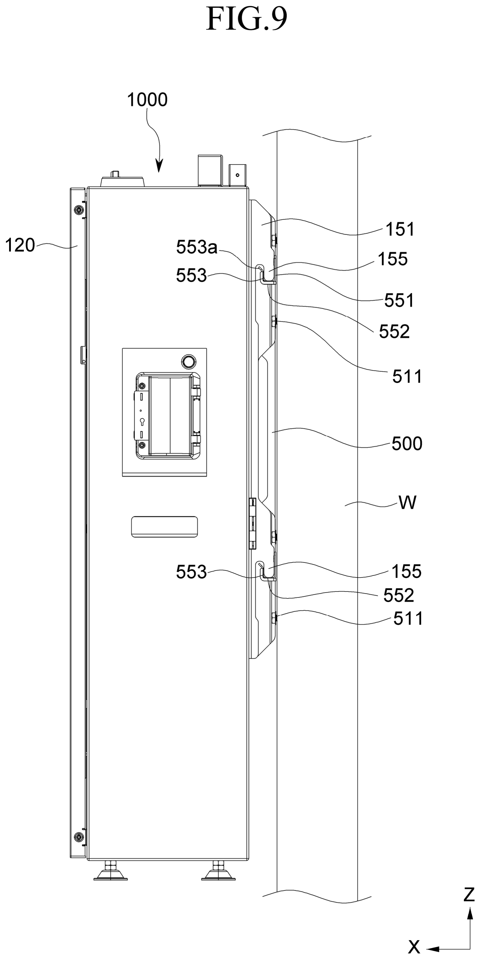

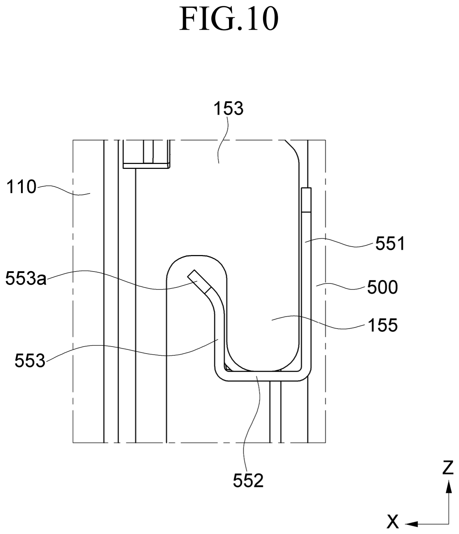

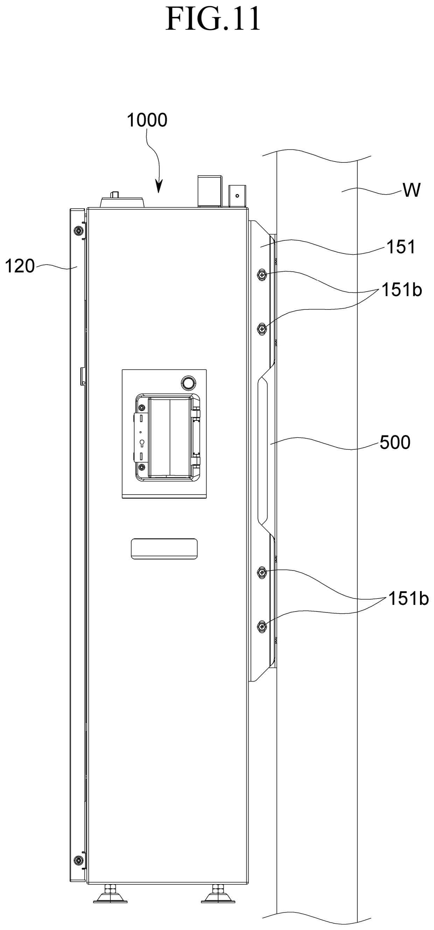

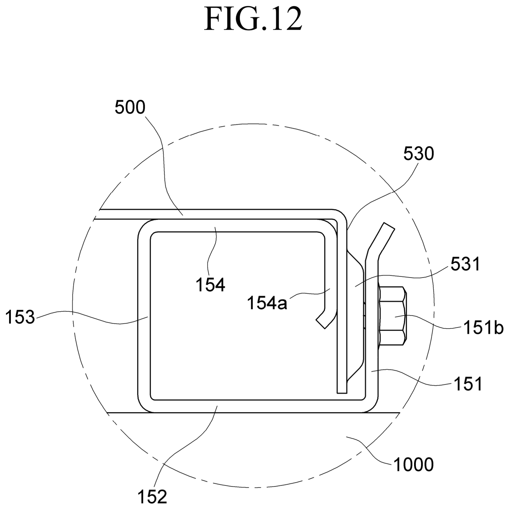

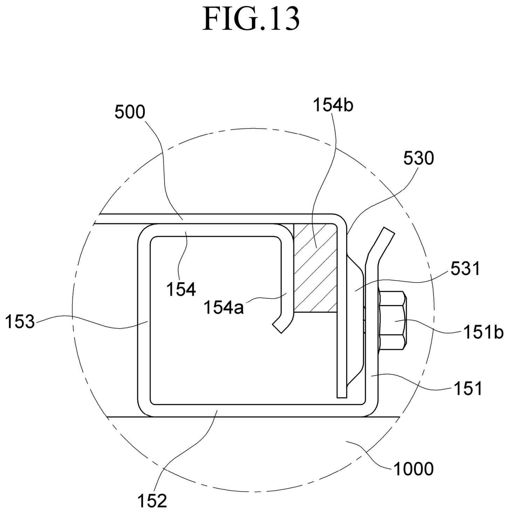

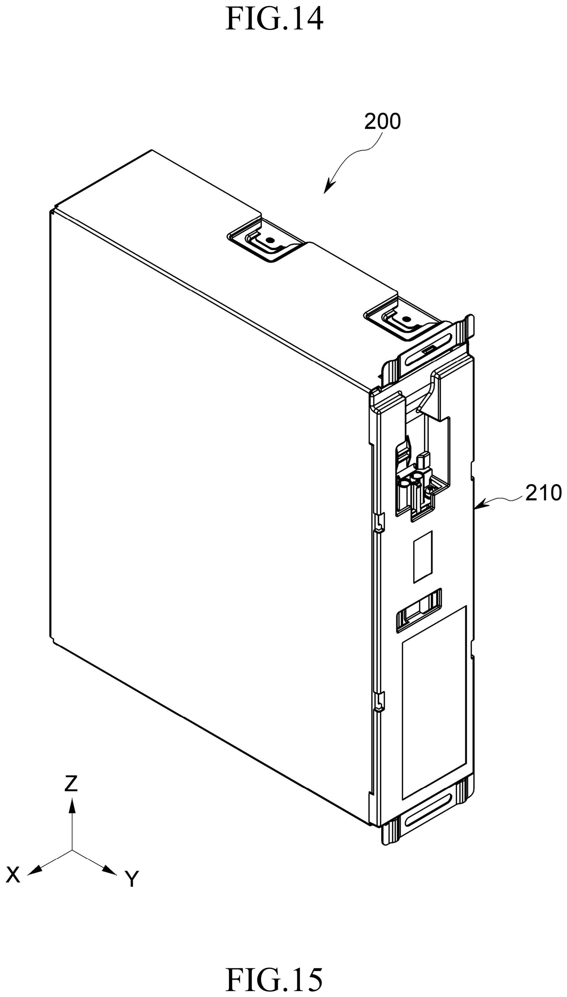

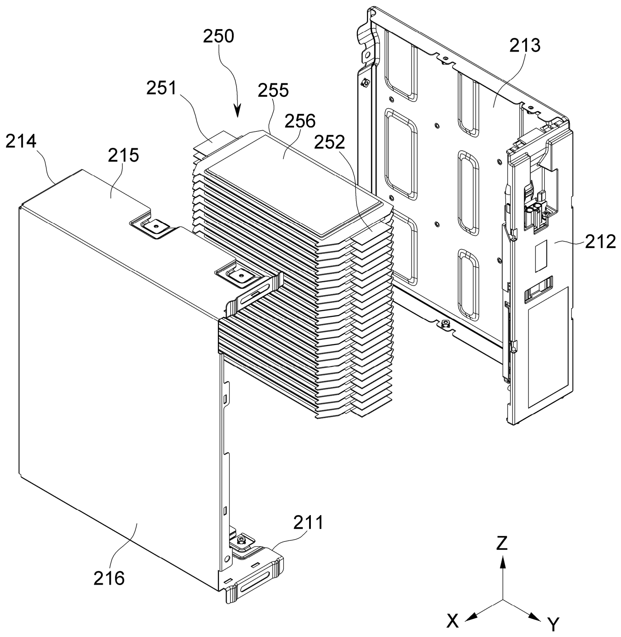

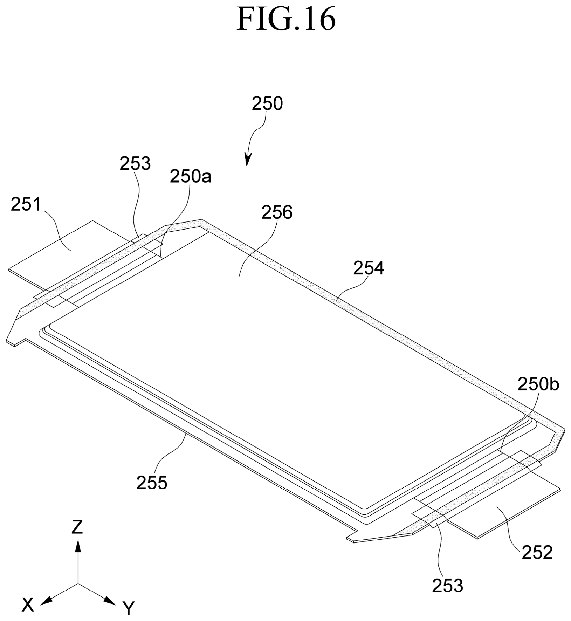

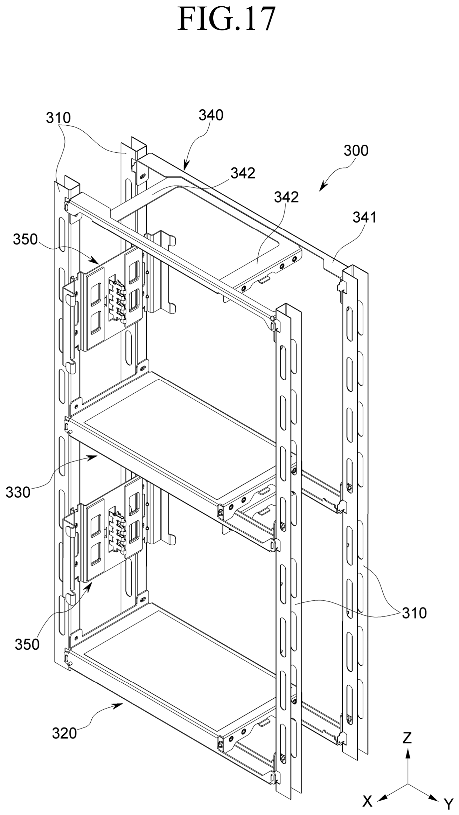

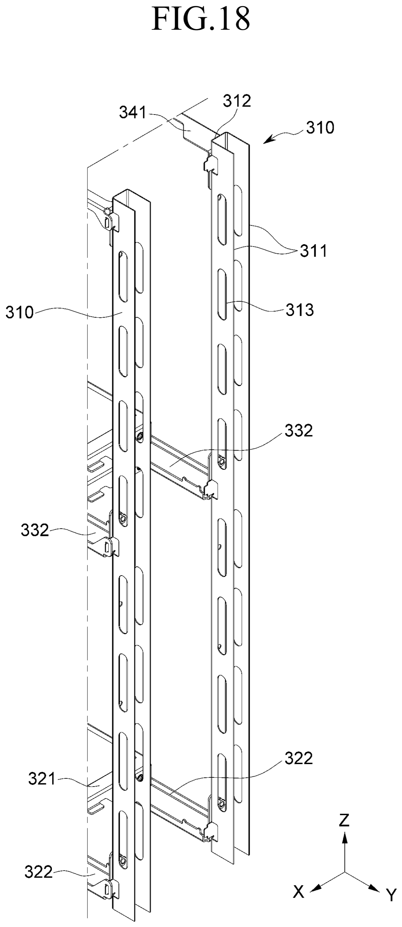

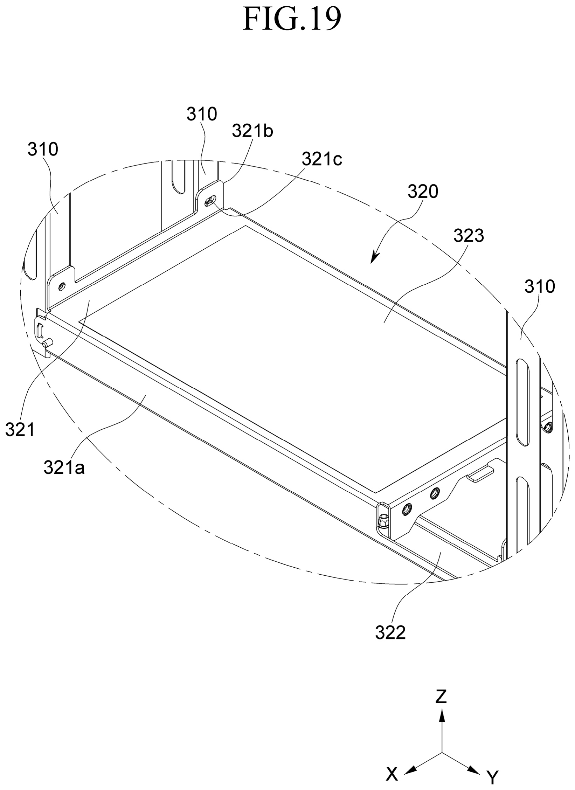

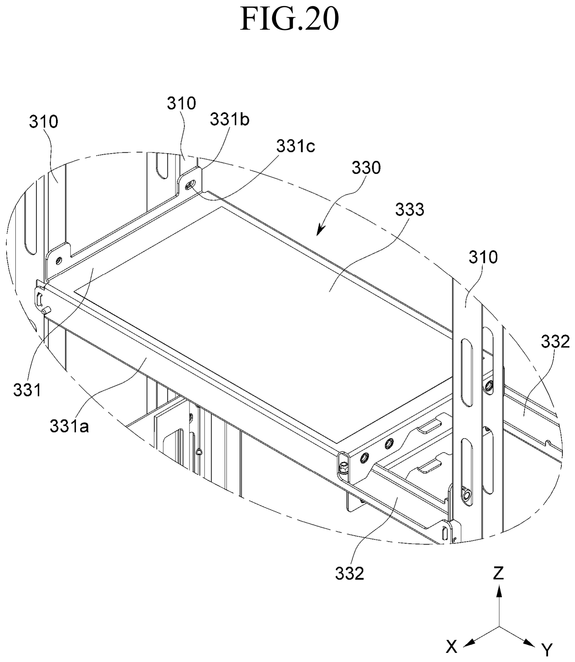

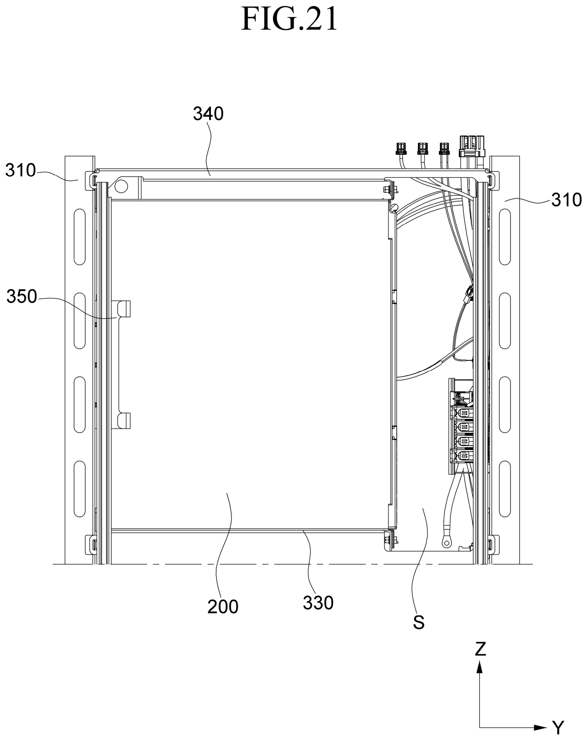

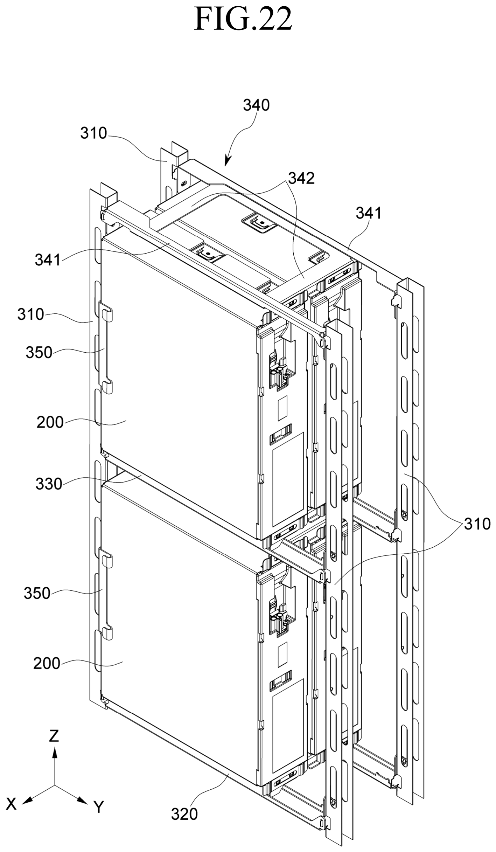

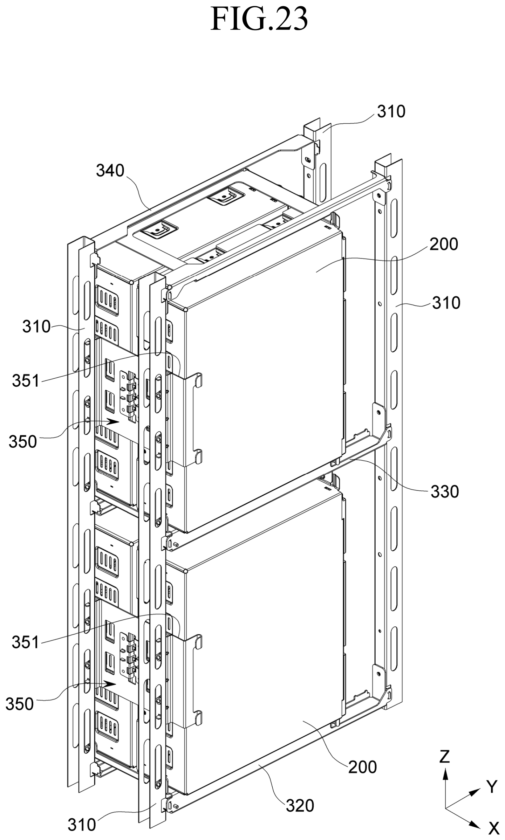

FIG. 1 is a perspective view illustrating an energy storage device according to an embodiment of the present disclosure, FIG. 2 is an exploded perspective view illustrating the energy storage device illustrated in FIG. 1, FIG. 3 is a perspective view illustrating an energy storage device and a wall mounting bracket according to an embodiment of the present disclosure, FIG. 4 is a rear perspective view illustrating an energy storage device coupled to a wall mounting bracket according to an embodiment of the present disclosure, FIG. 5 is a rear perspective view illustrating an energy storage device according to an embodiment of the present disclosure, FIGS. 6 to 11 are views illustrating a process of mounting an energy storage device on a wall mounting bracket according to an embodiment of the present disclosure, FIG. 6 is a view illustrating a state in which the energy storage device is separated from the wall mounting bracket, FIG. 7 is a view illustrating a state in which the energy storage device is transferred to the wall mounting bracket according to an embodiment of the present disclosure, FIG. 8 is a partial side detailed view of FIG. 7, FIG. 9 is a view illustrating a state in which the energy storage device is supported by a wall mounting bracket, FIG. 10 is a detailed view illustrating that a support protrusion of a coupling bracket is supported by a rack bracket, FIG. 11 is a view illustrating a state in which an energy storage device is assembled to a wall mounting bracket according to an embodiment of the present disclosure, FIG. 12 is a view illustrating a wall mounting structure of an energy storage device 1000 according to another embodiment, FIG. 13 is a view illustrating a wall mounting structure of an energy storage device 1000 according to another embodiment, FIG. 14 is a perspective view illustrating a battery module according to an embodiment of the present disclosure, FIG. 15 is a view illustrating inside of a battery module according to an embodiment of the present disclosure, FIG. 16 is a view illustrating an example of a battery cell according to an embodiment of the present disclosure, FIG. 17 is a view illustrating a support frame supporting a battery module in an energy storage device according to an embodiment of the present disclosure, FIG. 18 is a detailed view illustrating a vertical support in FIG. 17, FIG. 19 is a detailed view illustrating a lower support in FIG. 17, FIG. 20 is a detailed view illustrating an upper support in FIG. 17, FIG. 21 is a front view illustrating a state in which a battery module is mounted on the upper support in FIG. 17, FIG. 22 is a perspective view illustrating a support frame with a battery module mounted on it according to an embodiment of the present disclosure, and FIG. 23 is a perspective view illustrating a support frame with a battery module mounted on it, viewed from another angle according to an embodiment of the present disclosure.

An energy storage device 1000 according to an embodiment of the present disclosure may include a case 100, a plurality of battery modules 200, and a support frame 300 configured to support the battery modules 200.

The case 100 may form an outer case of the energy storage device 1000, accommodate the plurality of battery modules 200 and the support frame 300, and include a main body 110 and a door 120.

In the case 100, the main body 110 may include a bottom portion 111, a front portion 112, a rear portion 114, a side portion 113, and a top portion 115.

The bottom portion 111 of the main body 110 may form the bottom of the main body 110 in the form of a plate extending in a horizontal direction. On an outer lower surface of the bottom portion 111, four support legs 111a for supporting the case 100 may be respectively disposed at corner portions of the bottom portion 111.

In the main body 110, the front portion 112 and the rear portion 114 may form a front surface and a rear surface of the case 100, respectively, and may be disposed on front and rear edges of the bottom portion 111 and the top portion 115, respectively.

In the main body 110, the side portion 113 may form one side surface of the case 100, and may be disposed on left or right edges of the bottom portion 111 and the top portion 115, respectively.

The front portion 112, the rear portion 114, and the side portion 113 may form a side surface of the case 100 together with the door 120.

In the main body 110, the top portion 115 may be disposed on an upper portion of the case 100 to cover inside of the case 100. An electrical device such as a power conversion system (PCS) may be installed on an outer upper surface of the upper surface 115, and a structure for installing the electrical device may be provided.

The door 120 may be coupled to one side surface of the main body 110 to open and close the inside of the case 100. The door 120 may be disposed on an opposite side of the side portion 113 of the case 100 to face the side portion 113 and form one side surface of the case 100.

The door 120 may be rotatably coupled to the main body 110 by a hinge, and may also be coupled to the main body 110 so as to be completely detachable from the main body 110.

According to an embodiment of the present disclosure, a locking device for the door 120 may be provided.

Areas of the side portion 113 and the door 120 in the case 100 may be the same or similar to each other, and the areas of the side portion 113 and the door 120 may be larger than an area of the bottom portion 111. For example, the areas of the side portion 113 and the door 120 may be twice or more that of the bottom portion 111, and accordingly, as illustrated, a surface of the case 100 of the energy storage device 1000 having a large area may be disposed to be erected forming the side surface, thereby reducing the installation area.

According to an embodiment of the present disclosure, the energy storage device 1000 may be coupled to a wall mounting bracket 500 and mounted on a wall W. FIGS. 3 to 11 are views for explaining a wall mounting structure according to an embodiment of the present disclosure.

The wall mounting bracket 500 may be fixed to the wall W to support the energy storage device 1000.

As illustrated in FIG. 3, the wall mounting bracket 500 may include a plurality of coupling holes 510. A fixing portion 511 may be coupled to each coupling hole 510, and the wall mounting bracket 500 may be fixed to the wall W by the fixing portion 511. The fixing portion 511 coupled to the coupling hole 510 may be a screw, a nail, an anchor, an anchor bolt, and the like.

In the present embodiment, the coupling hole 510 may extend in a horizontal direction (Y-axis direction). Since the coupling hole 510 extends in a width direction (Y-axis direction) of the wall mounting bracket 500, a fixing position of the fixing portion 511 within the coupling hole 510 may be adjusted. As illustrated, the plurality of coupling holes 510 may be disposed on left and right sides of the wall mounting bracket 500 and may also be disposed on upper and lower sides.

The wall mounting bracket 500 may include a rack bracket 550.

The rack bracket 550 is configured to support a coupling bracket 150 disposed at a rear surface of the energy storage device 1000, and may be formed to extend in the width direction (Y-axis direction) of the wall mounting bracket 500.

The rack bracket 550 may include a coupling portion 551 coupled to the wall mounting bracket 500, a support 552, and an upward extension 553 (see FIGS. 3 and 10).

The coupling portion 551 may be bent upward from a rear end of the support 552, and the coupling portion 551 may be coupled to the wall mounting bracket 500 by welding and the like.

In the present embodiment, the coupling portion 551 may be disposed on both left and right sides of the wall mounting bracket 500.

The support 552 may be formed to extend in the width direction (Y-axis direction) of the wall mounting bracket 500 and may have a plate shape that is elongated in one direction.

As illustrated in FIGS. 9 and 10, the support 552 may support a support protrusion 155 of the coupling bracket 150 from below.

The upward extension 553 may be disposed on opposite sides of the support 552 and may be bent upward from a front end of the support 552.

The upward extension 553 may support one side surface of the support protrusion 155 and may support the support protrusion 155 together with the support 552 as illustrated in FIG.

10. Since the upward extension 553 may extend upward from one end of the support 552 and support the one side surface of the support protrusion 155, the support protrusion 155 may be prevented from being separated from the wall bracket 500 in a forward direction (X-axis direction).

An upper end of the upward extension 553 may be bent forward as illustrated in FIG. 10. By forming the upper end of the upper extension 553 to be bent forward in such a way, when the support protrusion 155 of the coupling bracket 150 moves downward and coupled to the rack bracket 550 as in FIG. 8, the support protrusion 155 may easily move inside the upper extension 553.

The coupling portion 551, the support 552, and the upper extension 553 constituting the rack bracket 550 may be formed integrally.

The rack brackets 550 may be respectively disposed at upper and lower portions of the wall mounting bracket 500, and the support protrusions 155 may be respectively supported by the rack brackets 550.

Accordingly, the coupling bracket 150 disposed on a rear surface of the energy storage device 1000 may be hung on the rack bracket 550 such that the energy storage device 1000 may be mounted on the wall mounting bracket 500.

Wing plates 530 may be respectively disposed on opposite side ends of the wall mounting bracket 500.

The wing plates 530 may be bent forward from opposite side ends of the wall mounting bracket 500. As illustrated in FIG. 3, each wing plate 530 may include a protrusion plate 531 and a coupling hole 532, and the coupling hole 532 may be formed in the protrusion plate 531. A coupling portion 151b for coupling the coupling bracket 150 and the wall mounting bracket 500 may be inserted into the coupling hole 532.

The protrusion plate 531 may be formed as a certain portion of the wing plate 530 is convex outwardly, and an entire thickness of the wing plate 530 may protrude outwardly at an area of the protrusion plate 531.

The protrusion plate 531 formed to be convex outwardly on the wing plate 530 may contact an outer plate 151 of the coupling bracket 150. The coupling portion 151b may sequentially pass through a coupling hole 151a formed on the outer plate 151 of the coupling bracket 150 and the coupling hole 532 of the wing plate 530 and be screw-coupled with a nut on an inside of the protrusion plate 531. The nut to which the coupling portion 151b is coupled may be disposed on an inner surface of the protrusion plate 531 (a surface opposite to a surface of the protrusion plate 531 facing the outer plate 151), and may be fixed to the inner surface of the protrusion plate 531 by welding and the like. In this way, the wing plate 530 and the outer plate 151 may be firmly coupled to each other by tightening the coupling portion 151b in a state in which the protrusion plate 531 protruding from the wing plate 530 is in contact with the outer plate 151. The coupling portion 151b may be a bolt and the like.

The protrusion plates 531 and the coupling holes 532 may be provided in plural on the wing plate 530 in a vertical direction (Z direction).

A plurality of through holes 501 may be formed in the wall mounting bracket 500 as illustrated. By forming the plurality of through holes 501 in the wall mounting bracket 500, a self-load of the wall mounting bracket 500 may be reduced and air circulation may be facilitated, which may help in cooling the energy storage device 1000.

The coupling brackets 150 disposed on the rear surface of the main body 110 of the case 100 (rear surface of the side portion 113) may be respectively disposed on left and right sides of the rear surface of the main body 110, as illustrated in FIG. 5.

Each coupling bracket 150 may extend vertically (Z-axis direction) from an edge of the rear surface of the main body 110 and may include a coupling plate 152, the outer plate 151, and an inner plate 153.

The coupling plate 152 may extend vertically along the edge of the rear surface of the main body 110 and may be coupled to the rear surface of the main body 110 by welding and the like.

The outer plate 151 may be bent backward from an outer end of the coupling plate 152 (toward the wall mounting bracket 500), and the plurality of coupling holes 151a may be formed along the vertical direction. The coupling portion 151b inserted into the coupling hole 151a may be coupled to the coupling hole 532 of the wing plate 530 to couple the outer plate 151 and the wing plate 530.

The inner plate 153 may be bent backward from an inner end of the coupling plate 152 (toward the wall mounting bracket 500), may be disposed to face the outer plate 151, and may be disposed parallel to the outer plate 151.

A support protrusion 155 may be disposed on the inner plate 153. The support protrusion 155 may extend downwards, and as described above, the support protrusion 155 may be supported by the rack bracket 550 such that the energy storage device 1000 may be mounted on the wall mounting bracket 500.

The support protrusions 155 may be respectively disposed on upper and lower sides, and the support protrusions 150 on the upper and lower sides may be respectively coupled to the rack brackets 550 on the upper and lower sides of the wall mounting bracket 500.

FIGS. 6 to 11 are views illustrating a process of mounting the energy storage device 1000 on the wall mounting bracket 500 according to an embodiment of the present disclosure,

As illustrated in FIG. 6, in a state in which the energy storage device 1000 is separated from the wall mounting bracket 500, the energy storage device 1000 may be transferred toward the wall mounting bracket 500 and the energy storage device 1000 may be brought into close contact with the wall mounting bracket 500. At this time, the support protrusion 155 of the coupling bracket 150 may be positioned above the rack bracket 550.

Then, as illustrated in FIG. 7 and FIG. 8, the energy storage device 1000 may be lowered along the wall such that the support protrusion 155 of the coupling bracket 150 disposed on the rear surface (the side portion 113) of the main body 110 of the case 100 of the energy storage device 1000 may be supported by the rack bracket 550 of the wall mounting bracket 500. In such a case, the wing plate 530 of the wall mounting bracket 500 may be positioned between the outer plate 151 and the inner plate 153 of the coupling bracket 150, and each support protrusion 155 of the coupling brackets 150 on opposite sides may be supported by the support 552 on the inner side of the upper extension 553 of the rack bracket 550.

FIG. 10 is a detailed view illustrating a state in which the support protrusion 155 of the coupling bracket 150 is supported by the rack bracket 550 of the wall mounting bracket 500.

As such, in a state where the support protrusions 155 positioned on the upper and lower sides of the coupling bracket 150 are supported by the rack brackets 550 positioned on the upper and lower sides of the wall mounting bracket 500, the coupling bracket 150 may be fixed to the wall mounting bracket 500 using the coupling portion 151b.

Fixing the coupling bracket 150 to the wall mounting bracket 500 using the coupling portion 151b may be accomplished by inserting the coupling portion 151b into the coupling hole 151a formed in the outer plate 151 of the coupling bracket 150 and the coupling hole 532 of the wing plate 530 and screw-fitting the nut inside the coupling hole 532.

In such a way, by tightening the coupling portion 151b to firmly fix the coupling bracket 150 to the wall mounting bracket 500, the mounting of the energy storage device 1000 to the wall mounting bracket 500 may be completed.

As described above, in the wall mounting structure of the energy storage device 1000 according to the present embodiment, structural rigidity for supporting the energy storage device 1000 may be secured, installation may be made easy by hanging the energy storage device 1000 on the wall mounting bracket 500 fixed to the wall W, and the need for a structure for supporting the bottom of the energy storage device 1000 may be eliminated. In addition, in the present embodiment, the wall mounting bracket 500 may be hardly exposed to the outside, and the coupling bracket 150 of the energy storage device 1000 may be fixed to the wall mounting bracket 500 by the coupling portion 151b, thereby preventing rearward movement of the energy storage device 1000 and improving earthquake resistance.

FIG. 12 is a view illustrating a wall mounting structure of an energy storage device 1000 according to another embodiment, and is a partial plan view illustrating the energy storage device 1000 coupled to a wall mounting bracket 500.

In another embodiment illustrated in FIG. 12, a coupling bracket 150 may further include an extension support plate 154 extending from an inner plate 153 and a side support plate 154a extending from the extension support plate 154.

The extension support plate 154 may be bent from the inner plate 153 of the coupling bracket 150 toward an outer plate 151 and may extend along the wall mounting bracket 500. The extension support plate 154 may be in contact with the wall mounting bracket 500 and may be supported by the wall mounting bracket 500.

The side support plate 154a may be bent from an end of the extension support plate 154 toward the coupling plate 152 to extend along the wing plate 530 of the wall mounting bracket 500. The side support plate 154a may be in contact with the wing plate 530 and may be supported by the wing plate 530.

In another embodiment illustrated in FIG. 12, since the extension support plate 154 which is bent from the inner plate 153 of the coupling bracket 150 toward the outer plate 151 and the side support plate 154a which is bent from the extension support plate 154 to be in contact with the wing plate 530 are further included, left-right movement and vibration of the energy storage device 1000 may be suppressed and the energy storage device 1000 may be supported more stably.

FIG. 13 is a view illustrating a wall mounting structure of an energy storage device 1000 according to another embodiment, and is a partial plan view illustrating the energy storage device 1000 coupled to a wall mounting bracket 500.

In another embodiment illustrated in FIG. 13, a coupling bracket 150 may further include an extension support plate 154 extending from an inner plate 153, a side support plate 154a extending from the extension support plate 154, and an elastic portion 154b disposed on an outer side of the side support plate 154a.

The extension support plate 154 may be bent from the inner plate 153 of the coupling bracket 150 toward the outer plate 151 and may extend along the wall mounting bracket 500. The extension support plate 154 may be in contact with the wall mounting bracket 500 and may be supported by the wall mounting bracket 500.

The side support plate 154a may be bent from an end of the extension support plate 154 toward the coupling plate 152 and may extend along the wing plate 530 of the wall mounting bracket 500.

The elastic portion 154b may be disposed between the side support plate 154a and the wing plate 530, and may contact the wing plate 530 to elastically support the wing plate 530. The elastic portion 154b may be made of rubber, silicone, synthetic resin foam, or the like.

In another embodiment illustrated in FIG. 13, since the extension support plate 154 which is bent from the inner plate 153 of the coupling bracket 150 toward the outer plate 151, the side support plate 154a which is bent from the extension support plate 154 to be in contact with the wing plate 530, and the elastic portion 154b which elastically supports the wing plate 530 from the side support plate 154a are further included, left-right movement and vibration of the energy storage device 1000 may be suppressed and the energy storage device 1000 may be supported more stably.

As illustrated in FIGS. 14 and 15, the battery module 200 may include a module case 210 and a plurality of cell module assemblies (CMA) accommodated in the module case 210.

The cell module assembly (CMA) accommodated in the module case 210 may include a plurality of battery cells, and in each cell module assembly, the plurality of battery cells may be disposed in close contact.

Each battery cell may be, for example, a pouch-type battery cell 250. The pouch-type battery cell 250 may have a structure in which an electrode assembly is accommodated in a pouch-type case.

For example, the cell module assembly may include a plurality of battery cells that are mutually stacked or closely packed, and each battery cell may be provided with electrode leads 251, 252 at front and/or rear ends, and an anode lead may be provided at the front end, and a cathode lead may be provided at the rear end. In the cell module assembly, the plurality of battery cells 250 may be disposed to be electrically connected to each other.

In the cell module assembly of the present embodiment, the battery cells may be stacked vertically, and the plurality of cell module assemblies may be disposed vertically in the module case 210.

FIG. 16 is a view illustrating a pouch-type battery cell 250.

The battery cell 250 provided in a pouch type may include an electrode assembly and a cell case 255 that accommodates the electrode assembly.

The cell case 255 of the battery cell 250 may be a pouch-type cell case 255 for accommodating the electrode assembly. The cell case 255 may include a lower case and an upper case that covers the lower case, and the upper and lower cases may be integrally formed as a single body. As illustrated in FIG. 16, connecting portions of the upper and lower cases may be formed in a structure in which they are bent and folded. In addition, as illustrated, the upper case may completely cover the lower case and a sealing portion 254 may be formed in a peripheral area.

Both the upper and lower cases may be formed in a laminate structure including an inner cover layer, a metal layer, and an outer cover layer. The inner cover layer may be located on an inner side of the cell case 255 based on the metal layer, and since the inner cover layer comes into direct contact with the electrode assembly, it should have insulation and electrolytic resistance, and to ensure sealing from the outside, sealing property is required, that is, a sealing portion where inner layers are thermally bonded should have excellent thermal bonding strength. The metal layer may be located between the inner cover layer and the outer cover layer to serve as a barrier layer that prevents moisture or various gases from penetrating into the battery from the outside, and a lightweight aluminum (Al) thin film with excellent formability may be used as a material for the metal layer in contact with the inner cover layer. The outer cover layer may be located on an outer side of the cell case 255 based on the metal layer, and a heat-resistant polymer with excellent tensile strength, moisture permeability, and air permeability may be used as the outer cover layer to protect the electrode assembly while ensuring heat resistance and chemical resistance, and for example, nylon or polyethylene terephthalate may be used.

An accommodating recess 256 may be formed in each of the upper and lower cases, and the electrode assembly may be accommodated in the accommodating recess 256 of the upper and lower cases. In the cell case 255 of the pouch-type battery cell 250, a portion illustrated in FIG. 16 is the upper case, and the lower case is disposed below it. In the present embodiment, the lower case of the cell case 255 may be disposed to face the bottom portion 321 of the module case 210, and the lower case and its accommodating recess 256 may be disposed parallel to the bottom portion 211.

The electrode assembly accommodated in the cell case 255 may be one of the group consisting of a jelly-roll type electrode assembly having a structure in which a separator is interposed between long sheet-shaped anodes and cathodes and then rolled up, a stack-type electrode assembly including unit cells having a structure in which rectangular anodes and cathodes are laminated with a separator interposed between them, a stack-folding-type electrode assembly in which unit cells are rolled up by a long separator film, and a lamination-stack-type electrode assembly in which unit cells are laminated with a separator interposed between them and attached to each other.

In addition, the electrode assembly may include two electrode tabs 250a, 250b and two electrode leads 251, 252 connected to the two electrode tabs 250a, 250b by a welding portion, respectively.

One of the two electrode tabs 250a, 250b may be an anode tab, and the other may be a cathode tab.

One of the two electrode leads 251, 252 may be an anode lead connected to the anode tab, and the other of the two electrode leads 251, 252 may be a cathode lead connected to the cathode tab. For example, the anode leads 251, 252 may be made of aluminum (Al), and the cathode leads 251, 252 may be made of copper (Cu).

A lead film 253 may be attached to each of the electrode leads 251, 252. The lead film 253 coupled to the electrode leads 251, 252 may be disposed between the electrode leads 251, 252 and the cell case 255 to prevent a short circuit from occurring between the electrode leads 251, 252 and the cell case 255 and improve the sealing force, thereby preventing leakage of the electrolyte, and the like.

Although the two electrode leads 251, 252 are illustrated as being disposed on each opposite side of the electrode assembly, the two electrode leads 251, 252 may be disposed on only one side of the electrode assembly depending on arrangement of the electrode tabs.

In the cell module assembly, the battery cell is not limited to the pouch-type battery cell, and may include other types of battery cells, such as poly prism or cylindrical battery cells.

The cell module assembly may be disposed in the module case 210 of the battery module 200 in an open form without an independent housing. In addition, as another example, the cell module assembly may be in the form of a plurality of battery cells housed in a housing, and the cell module assembly may be housed in individual housings and independently disposed in the module case 210.

As another example, the battery module 200 may be disposed in the module case 210 by stacking a plurality of battery cells.

The module case 210 may include a bottom portion 211, a front portion 212, a rear portion 214, opposite side portions 213, 216, and a top portion 215.

The bottom portion 211 of the module case 210 may form a bottom of the module case 210 in the form of a plate extending in a horizontal direction.

The front portion 212 and the rear portion 214 may form front and rear surfaces of the module case 210, respectively, and may be disposed at front and rear edges of the bottom portion 211 and the top portion 215, respectively.

The two side portions 213, 216 may form the two side surfaces of the module case 210 and may be respectively disposed on left and right edges of the bottom portion 211 and the upper portion 215.

The front portion 212, the rear portion 214, and the two side portions 213, 216 may form a side surface of the module case 210.

The upper portion 215 may be disposed on an upper portion of the module case 210 and cover inside of the module case 210.

Areas of the side portions 213, 216 in the module case 210 may be larger than an area of the bottom portion 211. For example, the area of the side portions 213, 216 may be twice or more that of the bottom portion 211, and accordingly, as illustrated, a surface of the module case 210 having a large area may be disposed to be erected forming the side surface of the module case 210, instead of the bottom, thereby reducing the installation area in the energy storage device 1000.

These multiple battery modules 200 may be disposed in the support frame 300 in the case 100.

FIG. 17 is a view illustrating the support frame 300 that supports the battery module 200 in the energy storage device 1000 according to an embodiment of the present disclosure.

The support frame 300 may support multiple battery modules 200. In the present embodiment, the support frame 300 may include a plurality of vertical supports 310, a lower support 320, an upper support 330, a top fixing portion 340, and a module fixing portion 350.

In the present embodiment, four vertical supports 310 may be provided with two vertical supports 310 disposed in front of the battery module 200 and two vertical supports 310 disposed in the rear of the battery module 200.

The vertical support 310 may include a pair of wing plates 311 and a connecting plate 312.

The connecting plate 312 disposed between the pair of wing plates 311 may connect the pair of wing plates 311. The pair of wing plates 311 and the connecting plate 312 may be formed integrally, and the pair of wing plates 311 in the vertical support 310 may be bent outwardly (in an opposite direction from the battery module 200) at a certain angle (e.g., a right angle) at opposite ends of the connecting plate 312 and may be disposed parallel to each other.

A plurality of through holes 313 may be provided spaced apart from each other along a longitudinal direction in each wing plate 311.

Since the vertical support 310 includes the pair of wing plates 311 bent on opposite sides of the connecting plate 312 in this way, structural rigidity may be reinforced.

The lower support 320 may be disposed on a lower portion of the support frame 300 to support the plurality of battery modules 200.

In the present embodiment, it is illustrated that two battery modules 200 are supported by the lower support 320, but two or more battery modules 200 may be disposed on the lower support 320.

The lower support 320 may include a support plate 321 and two horizontal portions 322 (see FIG. 19).

The support plate 321 may be formed as a plate having an approximately quadrangular shape, and the battery module 200 may be supported on the support plate 321. The support plate 321 may be integrally formed with a bent plate 321b that is bent upward from an edge in a width direction (X-axis direction) of the support plate 321, and may be fixed by being coupled to two vertical supports 310 disposed at the rear of the battery module 200 using a bolt or the like through a coupling hole 321c formed in the bent plate 321b. The support plate 321 may be coupled to the vertical support 310 by means of bolts, rivets, welding, and the like. A material of the support plate 321 may be, for example, metal.

A sheet 323 may be disposed on the support plate 321.

The sheet 323 may be coupled or attached with an adhesive to the support plate 321, and may be, for example, a resin sheet, a polycarbonate sheet, and the like. As the sheet 323, a polycarbonate sheet has excellent electrical insulation, durability, weather resistance, impact resistance, and the like, and may stably support the heavy battery module 200.

In the present embodiment, as the sheet 323 is disposed on the support plate 321, friction may be reduced when the heavy battery module 200 is disposed on the support plate 321, such that installation of the battery module 200 may be facilitated and scratches between contact portions may be prevented.

An area of the sheet 323 may be equal to or smaller than an area of the support plate 321, and may be larger than a sum of the areas of the bottom portions 211 of the two battery modules 200.

The two side portions 321a bent downward at opposite ends of the support plate 321 along the longitudinal direction (Y-axis direction) may be provided. A length of the side portion 321a along the longitudinal direction (Y-axis direction) may be equal to that of the support plate 321.

The two horizontal portions 322 may be bent (e.g., at a right angle) toward the support plate 321 from end portions of the side portions 321a. The horizontal portions 322 may be parallel to the support plate 321.

The horizontal portion 322 may be formed integrally with the support plate 321, and one end of each horizontal portion 322 may be coupled to a lower portion of the vertical support 310 disposed in front of the battery module 200. The horizontal portion 322 may be coupled to the vertical support 310 using a bolt, a rivet, welding, or the like.

In addition, the horizontal portion 322 may be formed in a plate shape, and may extend and protrude further than the support plate 321 in the longitudinal direction (Y-axis direction). Accordingly, in the longitudinal direction (Y-axis direction), a length of the horizontal portion 322 may be longer than the support plate 321. Accordingly, a space S may be formed between the front portion of the battery module 200 disposed on the support plate 321 and the vertical support 310 coupled to the horizontal portion 322, and in the present embodiment, by securing the space S inside the vertical support 310 in this way, insertion and assembly of the battery module 200 is facilitated, and electrical work is facilitated along with installation of electrical devices and wirings (see FIG. 15).

In the lower support 320, the support plate 321, the side portion 321a, and the horizontal portion 322 may be formed integrally.

The lower support 320 may be bent from opposite ends of the support plate 321 to place the side portion 321a, and the horizontal portion 322 may be bent at the side portion 321a to place the horizontal portion 322, thereby reinforcing the rigidity and stably supporting the heavy battery module 200.

The upper support 330 may be disposed at an upper portion of the lower support 320 in the support frame 300 to support the plurality of battery modules 200. In the present embodiment, the upper support 330 may be disposed between the lower support 320 and the top fixing portion 340, and may be connected to approximately a center portion of the vertical support 310.

The configuration of the upper support 330 may be similar to that of the lower support 320. Although it is illustrated that there are two battery modules 200 supported on the upper support 330, two or more battery modules 200 may be disposed on the upper support 330.

The upper support 330 may include a support plate 331 and two horizontal portions 332 (see FIG. 20).

In the upper support 330, the support plate 331 may be formed as a plate having an approximately quadrangular shape. The support plate 331 may be integrally formed with a bent plate 331b that is bent upward from an edge in the width direction (X-axis direction) of the support plate 331, and may be fixed by being coupled to the two vertical supports 310 disposed at the rear of the battery module 200 using a bolt or the like through a coupling hole 331c formed in the bent plate 331b. The support plate 331 may be made of, for example, a metal material, and may be coupled to the vertical support 310 by means of bolts, rivets, welding, and the like.

A sheet 333 may be disposed on the support plate 331. The sheet 333 may be coupled or attached with an adhesive to the support plate 321, and may be, for example, a resin sheet, a poly carbonate sheet, or the like.

In the upper support 330, similarly to the lower support 320, the sheet 333 may be disposed on the support plate 331, such that friction may be reduced when the heavy battery module 200 is disposed on the support plate 331, thereby facilitating installation of the battery module 200.

An area of the sheet 333 may be the same as or smaller than an area of the support plate 331, and may be larger than a sum of the areas of the bottom portions 211 of the two battery modules 200.

The side portion 331a may be bent downwards at opposite ends of the support plate 331 along the longitudinal direction (Y-axis direction). In the longitudinal direction (Y-axis direction), a length of the side portion 331a may be the same as that of the support plate 331.

The two horizontal portions 332 may be bent (e.g., at a right angle) from end portions of the side portion 331a toward the support plate 321. The horizontal portion 332 may be parallel to the support plate 331.

In the upper support 330, the horizontal portion 332 may be formed integrally with the support plate 331, and one end of each horizontal portion 332 may be coupled to a center portion of the vertical support 310 disposed in front of the battery module 200 by means of a bolt, rivet, welding, or the like.

In addition, the horizontal portion 332 may be formed in a plate shape, and may extend and protrude further than the support plate 331 in the longitudinal direction (Y-axis direction). Accordingly, in the longitudinal direction (Y-axis direction), a length of the horizontal portion 332 may be longer than that of the support plate 331. Accordingly, a space S may be formed between the front portion of the battery module 200 disposed on the support plate 331 and the vertical support 310 coupled to the horizontal portion 332, such that the space S inside the vertical support 310 may be secured to facilitate insertion and assembly of the battery module 200 and facilitate electrical work.

In the upper support 330, the support plate 331, the side portion 331a, and the horizontal portion 332 may also be formed integrally.

The upper support 330 may be bent at opposite ends of the support plate 331 to place the side portion 331a, and the horizontal portion 332 may be bent at the side portion 331a to place the horizontal portion 332, thereby reinforcing rigidity and stably supporting the heavy battery module 200.

The top fixing portion 340 may be disposed at an upper portion of the support frame 300 and may serve to fix and support the upper portion of the support frame 300.

The top fixing portion 340 may include two fixing portions 341 and two connecting portions 342.

In the top fixing portion 340, the fixing portion 341 may have one end coupled to the vertical support 310 in front of the battery module 200, and the other end of the fixing portion 341 may be connected to the vertical support 310 in the rear of the battery module 200. The two fixing portions 341 may be disposed parallel to each other. The fixing portion 341 may be coupled to the vertical support 310 by a bolt, a rivet, welding, or the like.

The connecting portion 342 may have one end connected to one fixing portion 341 and the other end connected to another fixing portion 341 to connect the two fixing portions 341 to each other. The two connecting portions 342 may be disposed apart from each other along the longitudinal direction (Y-axis direction) of the fixing portion 341 and may be disposed parallel to each other.

In this way, the two fixing portions 341 may connect the two vertical supports 310 disposed at the front and rear of the battery module 200 to each other, and the two connecting portions 342 may connect the two fixing portions 341 to each other, such that the top fixing portion 340 may fix and support the top of the support frame 300.

In the present embodiment, the module fixing portion 350 may be coupled to the vertical support 310 to fix the two battery modules 200, thereby preventing movement and vibration.

As illustrated, upper and lower module fixing portions 350 may be disposed on the two vertical supports 310 at the rear of the battery module 200, and the lower module fixing portion 350 may fix the two battery modules 200 disposed on the lower support 320, and the upper module fixing portion 350 may fix the two battery modules 200 disposed on the upper support 330.

The module fixing portion 350 may include a coupling plate 351 coupled and fixed to the two vertical supports 310, and a rear side of the two battery modules 200 may be supported by the coupling plate 351.

In the present embodiment, since the support frame 300 has the configuration described above, the rigidity of the structure may be stably secured. In addition, the energy storage device 1000 according to the present embodiment may have a reduced installation area and a thinner thickness (a distance in the X-axis direction).

The present disclosure has been described with reference to embodiments as described above, but the present disclosure is not limited to the above embodiments, and various changes and modifications may be made by those skilled in the art within the scope that does not depart from the spirit of the present disclosure.

### [INDUSTRIAL APPLICABILITY]

The present disclosure may provide a wall mounting structure for an energy storage device which is capable of easily installing the energy storage device and is capable of stably supporting the energy storage device.

## Claims

1. A wall mounting structure for an energy storage device, comprising:
a coupling bracket disposed on the energy storage device and comprising a support protrusion; and
a wall mounting bracket comprising a rack bracket, on which the support protrusion is supported, and configured to be fixed to a wall.

2. The wall mounting structure for the energy storage device of claim 1, wherein the wall mounting bracket comprises
at least one coupling hole extending in a width direction of the wall mounting bracket; and
a fixing member inserted into the at least one coupling hole that is coupled to the wall such that the wall mounting bracket is fixed to the wall.

3. The wall mounting structure for the energy storage device of claim 1, wherein the rack bracket is disposed on each of upper and lower sides of the wall mounting bracket.

4. The wall mounting structure for the energy storage device of claim 1, wherein the rack bracket comprises:
a coupling portion coupled to the wall mounting bracket;
a support bent forward from the coupling portion; and
an upward extension bent upward from the support.

5. The wall mounting structure for the energy storage device of claim 4, wherein a lower portion of the support protrusion is supported by the support.

6. The wall mounting structure for the energy storage device of claim 4, wherein one side of the support protrusion is supported by the upward extension.

7. The wall mounting structure for the energy storage device of claim 4, wherein an end of the upward extension is bent forward.

8. The wall mounting structure for the energy storage device of claim 4, wherein the upward extension is disposed on each of left and right sides in front of the support.

9. The wall mounting structure for the energy storage device of claim 1, wherein the wall mounting bracket further comprises a wing plate that is bent forward at opposite side ends of the wall mounting bracket.

10. The wall mounting structure for the energy storage device of claim 9, wherein the wing plate comprises a protrusion plate which is shaped convexly outward.

11. The wall mounting structure for the energy storage device of claim 10, wherein the wing plate further comprises a coupling hole formed in the protrusion plate.

12. The wall mounting structure for the energy storage device of claim 1, wherein the coupling bracket is disposed on each of left and right sides at a rear surface of the energy storage device.

13. The wall mounting structure for the energy storage device of claim 1, wherein the support protrusion is disposed on each of upper and lower portions of the coupling bracket.

14. The wall mounting structure for the energy storage device of claim 1, wherein the coupling bracket comprises:
a coupling plate coupled to a case of the energy storage device;
an outer plate bent rearward from an outer end of the coupling plate; and
an inner plate bent rearward from an inner end of the coupling plate.

15. The wall mounting structure for the energy storage device of claim 14, wherein the support protrusion is disposed on the inner plate.

16. The wall mounting structure for the energy storage device of claim 14, wherein the wall mounting bracket further comprises
a wing plate bent forward from each of opposite side ends of the wall mounting bracket; a coupling hole that is formed in the outer plate; and
a coupling portion inserted into the coupling hole and is coupled to the wing plate.

17. The wall mounting structure for the energy storage device of claim 14, wherein the coupling bracket further comprises:
an extension support plate which is bent and extends from the inner plate toward the outer plate; and
a side support plate which is bent from an end of the extension support plate toward the coupling plate.

18. The wall mounting structure for the energy storage device of claim 17, wherein the wall mounting bracket further comprises a wing plate which is bent forward from each of opposite side ends of the wall mounting bracket, and
the side support plate is supported by contacting the wing plate.

19. The wall mounting structure for the energy storage device of claim 17, wherein the wall mounting bracket further comprises an elastic portion disposed on the side support plate.

20. The wall mounting structure for the energy storage device of claim 19, wherein the wall mounting bracket further comprises a wing plate which is bent forward from each of opposite side ends of the wall mounting bracket, and
the elastic portion elastically supports the wing plate.
